# EUROPÄISCHE PATENTSCHRIFT

(11) **EP 2 479 340 B1**
(45) Veröffentlichungstag und Bekanntmachung des Hinweises auf die Patenterteilung: **28.12.2016**
(21) Anmeldenummer: 12151376.6
(22) Anmeldetag: 17.01.2012
(51) Int. Cl.: D06M 16/00, D06M 23/16, D06M 23/12, D06M 10/02, A01N 25/34, A01N 53/00, D06M 101/36

(54) **Verfahren zum Beschichten eines Gewebes und mit einem Vektorenschutz beschichtetes Gewebe**
Method for coating a woven textile and insecticide coated textile
Procédé de revêtements d'un tissu et tissu revêtu insecticide

(30) Priorität: 24.01.2011 DE 102011003044
(43) Veröffentlichungstag der Anmeldung: 25.07.2012
(73) Patentinhaber: IBENA Textilwerke GmbH, 46395 Bocholt (DE)
(72) Erfinder: Smeulders, Britta, 7131 WD Lichtenvoorde (NL); Lickes, Marion, 47804 Krefeld (DE); Diederich, Florian, 47798 Krefeld (DE)
(74) Vertreter: Hoffmann Eitle

(56) Entgegenhaltungen:
- DE-A1- 10 015 600
- DE-A1-102006 034 316
- DE-U1-202005 016 858
- FR-A1- 2 856 556
- US-A- 5 631 072

## Beschreibung

### Technisches Gebiet

Die Erfindung betrifft ein Verfahren zum Beschichten eines Gewebes mit einem Vektorenschutz und ein in dieser Weise beschichtetes Gewebe.

An Schutzkleidung wird in bestimmten Fällen die Anforderung gestellt, gegen Überträger von Krankheitserregern, wie z.B. Stechmücken, wirksam zu schützen. Derartige Überträger werden als Vektoren bezeichnet und ein Schutz hiergegen dementsprechend als Vektorenschutz.

### Stand der Technik

Diesbezüglich ist aus der EP 1 598 475 B1 ein Verfahren zum Beschichten eines Gewebes mit einem Vektorenschutz, wie z.B. dem Wirkstoff Permethrin bekannt. Ein ähnliches Verfahren geht aus der EP 1 944 408 A2 hervor, und die DE 20 2005 004 056 U1 betrifft ein Gewebe aus Aramidfasern, das mit einem Vektorenschutz versehen ist.

Aus der DE 10 2006 034 316 A1 geht eine Vorrichtung zum Schutz von Tieren vor Insekten hervor, die ein Abstandsgewirk aufweist, das einer Hydrophilierungsbehandlung unterworfen werden kann, und das ein Insektizid auf einer Seite des Abstandsgewirkes aufweist. Die DE 20 2005 016 858 U1 betrifft eine Sonnenschutzvorrichtung, die mit einer permetrinhaltigen Wirkstoffkombination versehen ist. Schließlich ist aus der US 5,631,072 A ein Gewebe für Kleidung bekannt, das einseitig mit Permetrin beschichtet sein kann.

### Darstellung der Erfindung

Der Erfindung liegt die Aufgabe zugrunde, ein Verfahren zum Beschichten eines Gewebes mit einem Vektorenschutz und ein derartiges Gewebe zu schaffen, bei denen die Dauerhaftigkeit des Vektorenschutzes verbessert werden kann.

Die Lösung dieser Aufgabe erfolgt zum einen durch das im Anspruch 1 beschriebene Verfahren.

Demzufolge wird bei dem erfindungsgemäßen Verfahren zum Beschichten eines Gewebes mit einem Vektorenschutz, insbesondere Permethrin, das Gewebe vor dem Beschichten einer elektro-mechanischen Behandlung unterworfen und hierbei insbesondere aufgeraut. Eine elektro-mechanische Behandlung ist im Gegensatz zu einer chemischen Behandlung zu sehen, die mit der Behandlung des Gewebes durch geeignete Chemikalien einhergeht, bei denen das Gewebe jedoch im Laufe der Gebrauchsdauer insbesondere beim Waschen der Chemikalien und damit die durch die Chemikalien erzeugten Eigenschaften verliert. Durch die verwendeten Chemikalien wird somit zunächst die Haftung des Vektorenschutzes verbessert, verschlechtert sich jedoch im Laufe der Gebrauchsdauer.

Wenngleich eine chemische Behandlung bei dem erfindungsgemäßen Verfahren ergänzend vorgesehen sein kann, bewirkt das erfindungsgemäße Verfahren durch die elektro-mechanische Behandlung eine Vergrößerung der Oberfläche des Gewebes, insbesondere von deren Einzelfasern, so dass das Gewebe insgesamt netzfähig gemacht wird, und ein Vektorenschutz dauerhaft verbleibt. Insbesondere haben erste Versuche ergeben, dass der Rest-Vektorenschutzgehalt auch nach 100-mal Waschen bei 93% liegt. Auch in diesem Zustand erfüllt ein erfindungsgemäß beschichtetes Gewebe die Anforderungen im Hinblick auf die Lähmung von Mücken, die Krankheiten, wie z.B. Gelbfieber, übertragen können.

Das erfindungsgemäß beschichtete Gewebe bietet darüber hinaus in vorteilhafter Weise die Möglichkeit, bedruckt, insbesondere mit Tarndrucken versehen zu werden, indem das Gewebe nach der elektro-mechanischen Behandlung mit einem Bindersystem beschichtet wird, das die Farbpigmente des Tarndrucks aufnehmen kann. Hierbei ergibt sich der weitere Vorteil, dass das Gewebe hydrophile Eigenschaften bekommt und dementsprechend in vorteilhafter Weise Feuchtigkeit, insbesondere Schweiß, aufnimmt und damit der Tragekomfort erhöht wird. Dadurch, dass die erfindungsgemäße Behandlung vor der Beschichtung mit dem Vektorenschutz die Aufnahmefähigkeit für den Vektorenschutz erhöht, kann die Menge des aufgebrachten Wirkstoffes in vorteilhafter Weise verringert werden. Im Hinblick auf Details einer elektro-mechanischen Behandlung wird auf die WO 2007/019977 A1 verwiesen.

Bevorzugte Weiterbildungen des erfindungsgemäßen Verfahrens sind in den weiteren Ansprüchen beschrieben.

Im Hinblick auf die elektro-mechanische Behandlung wird derzeit eine Plasma- und/oder Coronabehandlung bevorzugt. Insbesondere wird eine Niederdruck-Plasmatechnik bevorzugt. Bei der Plasmatechnik wird Gas in einem Vakuum durch Energiezufuhr angeregt. Hierdurch entstehen energiereiche Ionen und Elektronen sowie weitere reaktive Teilchen, die das Plasma bilden. Die Einwirkung des Plasmas auf das Gewebe besteht im Wesentlichen in drei Effekten. Zum einen wird die Oberfläche der Gewebefäden durch den Ionenbeschuss abgetragen, so dass von einem Mikrosandstrahlen gesprochen werden kann. Ferner reagiert das ionisierte Gas chemisch mit der Oberfläche und verändert diese. Schließlich herrscht in dem Plasma eine UV-Strahlung, welche langkettige Kohlenstoffverbindungen aufbricht.

Erfindungsgemäß erfolgt die Beschichtung mit dem Vektorenschutz nur einseitig. Insbesondere wird diese Beschichtung bevorzugt nur für die spätere Außenseite des Gewebes vorgesehen. Dies bietet den Vorteil, dass allergische Reaktionen auf der Haut, die bei dem Wirkstoff des Vektorenschutzes möglich sind, ausgeschlossen werden. Wenngleich die erfindungsgemäße Beschichtung auch auf Baumwollgewebe und Mischgewebe mit Viskose, Aramid, Polyester, Polyamid und/oder Baumwolle aufgebracht werden kann, wird derzeit bevorzugt, dass das erfindungsgemäße Verfahren bei einem Aramidgewebe oder einem Aramidmischgewebe verwendet wird. Beispielsweise kann es sich um ein Aramid/ViskoseFR Gewebe (FR = flame retardant, flammenhemmend) handeln. Ein Aramid enthaltendes Gewebe bietet zusätzlich zu den oben genannten Vorteilen gute Flammenhemmungs- und Hitzeabweisungseigenschaften.

Schließlich kann die Beschichtung mit dem Vektorenschutz durch Besprühen, Bedrucken, Rakeln oder Flatschen erfolgen, die in vorteilhafter Weise eine einseitige Beschichtung ermöglichen. Das Bedrucken kann insbesondere durch Flach- oder Rotationsdruck erfolgen.

Der genannte Vektorenschutz kann ferner zum Beschichten in Bindersysteme eingebracht werden, die porös, insbesondere mikroporös ausgebildet sein können. Ferner kann der Vektorenschutz mikroverkapselt vorliegen.

Um eine Hydrophobie zu erreichen, kann nach dem Beschichten eine Nachbehandlung, bevorzugt mit einem modifizierten Fluorcarbon, erfolgen.

Die Lösung der oben genannten Aufgabe erfolgt ferner durch das im Anspruch 7 beschriebene Gewebe, das die oben bereits genannten Vorteile bietet. Sämtliche im Zusammenhang mit dem erfindungsgemäßen Verfahren beschriebenen Merkmale sind auf das erfindungsgemäße Gewebe anwendbar und umgekehrt.

## Patentansprüche

1. Verfahren zum Beschichten eines Gewebes, das für Kleidung und dafür, auf der Haut getragen zu werden, geeignet ist mit einem Vektorenschutz, insbesondere Permethrin, bei dem das Gewebe vor der Beschichtung einer elektro-mechanischen Behandlung unterworfen, insbesondere aufgeraut wird, und das Gewebe einseitig beschichtet wird.

2. Verfahren nach Anspruch 1,
**dadurch gekennzeichnet, dass**
das Gewebe einer Plasma- und/oder Coronabehandlung unterworfen wird.

3. Verfahren nach einem der vorangehenden Ansprüche,
**dadurch gekennzeichnet, dass**
ein Aramidgewebe oder Aramidmischgewebe behandelt und beschichtet wird.

4. Verfahren nach einem der vorangehenden Ansprüche,
**dadurch gekennzeichnet, dass**
die Beschichtung durch Besprühen, Rakeln, Bedrucken und/oder Flatschen aufgebracht wird.

5. Verfahren nach einem der vorangehenden Ansprüche,
**dadurch gekennzeichnet, dass**
der Vektorenschutz in ein poröses, insbesondere mikroporöses Bindersystem eingebracht wird.

6. Verfahren nach einem der vorangehenden Ansprüche,
**dadurch gekennzeichnet, dass**
das Gewebe einer Nachbehandlung mit einem modifizierten Fluorcarbon unterworfen wird.

7. Gewebe, das für Kleidung und dafür, auf der Haut getragen zu werden, geeignet ist, elektro-mechanisch behandelt und einseitig mit einem Vektorenschutz beschichtet ist.

8. Gewebe nach Anspruch 7,
**dadurch gekennzeichnet, dass**
das Gewebe ein Aramidgewebe oder ein Aramidmischgewebe ist.

9. Gewebe nach einem der Ansprüche 7 oder 8,
**dadurch gekennzeichnet, dass**
das Gewebe den Vektorenschutz in einem porösen, insbesondere mikroporösen Bindersystem aufweist.

10. Gewebe nach einem der Ansprüche 7 bis 9,
**dadurch gekennzeichnet, dass**
das Gewebe ferner ein Fluorcarbon aufweist.

## Claims

1. Method for coating a fabric which is suitable for clothing and for being worn on the skin having vector protection, in particular permethrin, in which the fabric is subjected to an electro-mechanical treatment before coating, in particular raised, and the fabric is coated on one side.

2. Method according to claim 1, **characterised in that** the fabric is subjected to a plasma treatment and/or corona treatment.

3. Method according to one of the preceding claims, **characterised in that** an aramide fabric or mixed aramide fabric is treated and coated.

4. Method according to one of the preceding claims, **characterised in that** the coating is applied by spraying, knife-coating, printing and/or agglomeration.

5. Method according to one of the preceding claims, **characterised in that** the vector protection is introduced into a porous, in particular microporous, binder system.

6. Method according to one of the preceding claims, **characterised in that** the fabric is subjected to an after-treatment using a modified fluorocarbon.

7. Fabric which is suitable for clothing and for being worn on the skin is treated electro-mechanically and coated on one side with vector protection.

8. Fabric according to claim 7, **characterised in that** the fabric is an aramide fabric or a mixed aramide fabric.

9. Fabric according to one of claims 7 or 8, **characterised in that** the fabric has the vector protection in a porous, in particular microporous, binder system.

10. Fabric according to one of claims 7 to 9, **characterised in that** the fabric further has a fluorocarbon.

## Revendications

1. Procédé d'enduction d'un tissu, qui convient pour un vêtement et donc pour être porté sur la peau, avec une protection contre des vecteurs, en particulier avec de la perméthrine, dans lequel on soumet le tissu avant l'enduction à un traitement électromécanique, en particulier à un grattage, et on enduit le tissu sur une face.

2. Procédé selon la revendication 1,
**caractérisé en ce que**
l'on soumet le tissu à un traitement au plasma et/ou à un traitement corona.

3. Procédé selon l'une quelconque des revendications précédentes,
**caractérisé en ce que** l'on traite et on enduit un tissu d'aramide ou un tissu de mélange d'aramide.

4. Procédé selon l'une quelconque des revendications précédentes,
**caractérisé en ce que**
l'on applique l'enduction par aspersion, raclage, impression et/ou projection.

5. Procédé selon l'une quelconque des revendications précédentes,
**caractérisé en ce que**
l'on intègre la protection contre des vecteurs à un système d'émulsion poreux, en particulier microporeux.

6. Procédé selon l'une quelconque des revendications précédentes,
**caractérisé en ce que**
l'on soumet le tissu à un post-traitement avec un fluorocarbone modifié.

7. Tissu, qui convient pour un vêtement et donc pour être porté sur la peau, qui est traité de façon électromécanique et qui est enduit sur une face d'une protection contre des vecteurs.

8. Tissu selon la revendication 7,
**caractérisé en ce que**
le tissu est un tissu d'aramide ou un tissu de mélange d'aramide.

9. Tissu selon l'une quelconque des revendications 7 ou 8,
**caractérisé en ce que**
le tissu comporte la protection contre des vecteurs dans un système de liant poreux, en particulier microporeux.

10. Tissu selon l'une quelconque des revendications 7 à 9,
**caractérisé en ce que**
le tissu comporte en plus un fluorocarbone.
